# EUROPEAN PATENT SPECIFICATION

(11) **EP 3 863 172 B1**
(45) Date of publication and mention of the grant of the patent: **04.03.2026**
(21) Application number: 18936062.1
(22) Date of filing: 04.10.2018
(51) Int. Cl.: H02P 1/26, H01H 89/06

(54) **AUXILIARY MODULE ASSEMBLY FOR A STARTER ASSEMBLY FOR ELECTRIC MOTORS**
HILFSMODULANORDNUNG FÜR EINE STARTERBAUGRUPPE FÜR ELEKTROMOTOREN
ENSEMBLES DE MODULES AUXILIAIRES POUR ENSEMBLE CLÉ DE DÉMARRAGE POUR MOTEURS ÉLECTRIQUES

(43) Date of publication of application: 11.08.2021
(73) Proprietor: Weg Drives & Controls - Automação LTDA, CEP :89256-900 Jaraguá do Sul - SC (BR)
(72) Inventor: DE BARROS ALBUQUERQUE, André, Vila Laulau Jaraguá Do Sul / SC (BR); SOARES PIVOTTO, Everton, Vila Laulau Jaraguá Do Sul / SC (BR); DECKER DE SOUZA, Fábio, Vila Laulau Jaraguá Do Sul / SC (BR); DETLEV GUNTHER, Ivo, 89251-670 Jaraguá Do Sul / SC (BR); BERNARDI ROSSO, Juliano, Vila Laulau Jaraguá Do Sul / SC (BR); DE MELO SILVA, Marcelo, Vila Laulau Jaraguá Do Sul / SC (BR); LUÍS PERINI, Ricardo, 89253-455 Jaraguá Do Sul / SC (BR)
(74) Representative: Stöckeler, Ferdinand
(86) International application number: PCT/BR2018/050365
(87) International publication number: WO 2020/069584

(56) References cited:
- EP-A1- 3 267 462
- CN-U- 202 679 306
- CN-Y- 2 757 425
- CN-Y- 2 817 180
- DE-A1- 102005 040 348
- DE-A1- 102007 002 176

## Description

### FIELD OF THE INVENTION

The present invention belongs to the technological field of starter assemblies for electric motors, more particularly an auxiliary module assembly for powering and monitoring, coupled to a multipolar circuit breaker and an electromagnetic contactor, which form a maneuvering set for low voltage applications, or additionally a variation of said auxiliary module assembly applied to a reversing motor starter assembly.

### BACKGROUND OF THE INVENTION

As is known in the state of the art, starter assemblies for electric motors operate based fundamentally on the function of turning a motor on or off, as well as protecting it, with main functions for eventual overloads or short circuits, by switching off the electrical circuit automatically and quickly enough to maintain the integrity of the electrical installation and the components inserted therein.

It is common to note in the state of the art that conventional starter assemblies use a cabling to electrically connect the electromagnetic contactor command to the power supply. Additionally, a cabling is used to connect the auxiliary contacts associated with the electromagnetic contactor to a logical processing unit, for the purpose of monitoring the status thereof. Said cabling makes the assembly of the starter assembly complex and costly, due to the amount of cables used and the time spent in assembling them, besides enabling intrinsic errors of execution of electrical assemblies.

In order to solve this problem of complexity in cabling, an accessory was made available in the state of the art, which comprises a front mounting board for multipolar circuit breakers and electromagnetic contactors, where the cabling is prefabricated and supplied embedded in said board.

In another case, an auxiliary module is supplied with a multipolar circuit breaker and an electromagnetic contactor, and said module has two units in front assembly, one of them associated with said multipolar circuit breaker that has internally an electrical contact in solidarity with the movable parts thereof, with the purpose of indicating its status through electrical signal, and the other unit of said module is associated with the electromagnetic contactor, and it does not have integrated electrical contacts, as it uses the built-in electrical contacts of the electromagnetic contactor itself to monitor the status thereof.

In another known embodiment, an auxiliary module is provided for frontal assembly in an electromagnetic contactor, and this auxiliary module has internally an electrical contact housed in a movable contact carrier, which is solidary to the movable parts of the electromagnetic contactor to indicate through a logical electrical signal, in low voltage, whether the component is on or off.

Although such solutions have advantages due to their unique characteristics of reducing cabling errors, these solutions bring in their construction principle complicated elements for assembly, with high cost and low reliability, due to the use of mechanisms for handling electrical contacts, which are liable to contamination or premature wear, besides requiring additional electrical connections to achieve their operation.

Another characteristic observed in the solutions presented in the state of the art is the fact that they only provide a connector housed in a module associated with the electromagnetic contactor, and said electromagnetic contactor commonly has high mechanical vibrations, which is an intrinsic characteristic of its operation, and may, due to this, induce connection failures and loss of communication signal in the cabling between them.

### STATE OF THE ART

One of the solutions in the state of the art, the patent FR2805094 (B1) of 2000, features a front mounting board for a motor starter, which uses an associated multipolar circuit breaker and electromagnetic contactor. Said mounting board is fixed on a multipolar circuit breaker(s) and an electromagnetic contactor(s) forming a set, and said multipolar circuit breaker(s) is (are) located above the electromagnetic contactor(s) when viewed frontally and the cabling required for the command and signaling being prefabricated and associated internally with said mounting board.

Another solution is presented in patent EP1517347 (B1) of 2004, in which a motor starter assembly is presented, comprised by a multipolar circuit breaker and an electromagnetic contactor, among others, and said multipolar circuit breaker is supplied with a signaling block having electrical contacts, and can be of the type normally open and / or normally closed, connected frontally to the frame of said multipolar circuit breaker. The electrical contacts, integrated into said signaling block of said multipolar circuit breaker has the function of indicating the operating status of said multipolar circuit breaker, for example, through the "on" or "off" condition. Another block that is associated frontally with said electromagnetic contactor, comprised by a printed circuit board, which connects the coil and auxiliary contacts through an insulation support, said support comprising conductive coupling pins in said electromagnetic contactor, said printed circuit board possessing at one end a first terminal, which connects through an interconnection cable to said signaling block, and at the other end a second terminal, which connects to a programmable controller by means of a communication cable.

Another solution is presented in document US9220170 (B2) on 2012, which presents a starter module, mounted on the front surface of an electromagnetic contactor, comprising a printed circuit board, physically connected to a system of electrical contacts, which has the purpose of indicate the state of said electromagnetic contactor, for example, which can be "on" or "off". Said printed circuit board also has the function of electrically controlling said electromagnetic contactor, locally or remotely, through a signal coming from communication. DE 10 2005 040348 A1 discloses a connection system with an electromagnetic switchgear, in particular a contactor, and a connector and an auxiliary modules assembly according to the preamble to claim 1.

DE 10 2007 002 176 A1 discloses a detection device for detecting the switching state of an electromagnetic switching device. EP 3 267 462 A1 discloses an interconnection module between an electrical circuit breaker and an electrical contactor.

### SUMARY OF THE INVENTION

A first objective of the present invention is to provide an auxiliary modules assembly for a starter assembly, comprised by a multipolar circuit breaker, can be whether a molded case circuit breaker or a motor circuit breaker, typically, and an electromagnetic contactor, among other components, and said auxiliary modules assembly is able to send communication signals to indicate the status of said multipolar circuit breaker and said electromagnetic contactor, and also receive by the same communication cable, command signals for said electromagnetic contactor, from a programmable controller.

A second objective of the present invention is that said auxiliary modules assembly for said starter assembly can reliably indicate electrical signals related to the status of the switching device, whether for the purpose of interpreting a multipolar circuit breaker or an electromagnetic contactor, through the preferred use of an optical sensor installed in the auxiliary modules, and these signals can be emitted from a multipolar circuit breaker and/or an electromagnetic contactor.

A third objective of the invention is to use the same auxiliary modules for different series of multipolar circuit breakers and electromagnetic contactors that form the starter assembly.

A fourth objective of the present invention is to couple the auxiliary modules in a starter assembly, using only mechanical connections, without the need for the use of tools, such as a screwdriver, for example.

A fifth objective of the invention is to use auxiliary modules for switching devices, such as circuit breakers and contactors having interchangeability with a module of auxiliary contacts, even for different series of multipolar circuit breakers and electromagnetic contactors that form the starter assembly.

A sixth objective of the invention is to provide auxiliary modules in which the coupling connector, coming from an associated programmable controller has a greater reliability in the transmission and reception of electrical signals when compared to the state of the art.

### BRIEF DESCRIPTION OF THE DRAWINGS

Figure 1 illustrates, in an isometric perspective, a starter assembly, comprising auxiliary modules, switching devices and a programmable controller, in a first preferred embodiment of the invention.
Figure 2 illustrates, in an exploded isometric perspective view, the parts that forms the starter assembly of Figure 1, later highlighting said auxiliary module assembly, according to a first preferred embodiment of the invention.
Figure 3 illustrates, in an isometric perspective view, a reversing starter assembly as a variation of the implementation of the auxiliary modules.
Figure 4 illustrates, in an exploded schematic isometric perspective view, the auxiliary module itself and the parts forming it, according to a first preferred embodiment of the invention.
Figure 5 is a front top view of said starter assembly, comprising a multipolar circuit breaker, an electromagnetic contactor, an upper auxiliary module, a lower auxiliary module, in addition to the indication of three sectional views A-A, B-B and C-C.
Figure 6 illustrates, in a section view A-A, an internal part of said upper auxiliary module of said auxiliary modules assembly in the "off" state, according to a first preferred embodiment of the invention.
Figure 7 illustrates, in a section view A-A, an internal part of said upper auxiliary module of said auxiliary modules in the "on" state, according to a first preferred embodiment of the invention.
Figure 8 illustrates, in a section view B-B, an internal part of said lower auxiliary module of said auxiliary module assembly in the disconnected state, according to a first preferred embodiment of the invention.
Figure 9 illustrates, in a section view B-B, an internal part of said lower auxiliary module of said auxiliary modules in the "on" state , according to a first preferred embodiment of the invention.
Figure 10 illustrates, in a section view C-C , an internal part of said lower auxiliary module of said auxiliary modules coupled to the contactor, according to a first preferred embodiment of the invention.
Figure 11 is a rear top view of said auxiliary modules assembly, comprising an upper auxiliary module and a lower auxiliary module, according to a first preferred embodiment of the invention.
Figure 12 illustrates, in an exploded isometric perspective view, the auxiliary contacts module for contactors and the parts that forms it, according to the state of the art.
Figure 13 is a rear top view of said module of auxiliary contacts, according to the state of the art.
Figure 14 illustrates, in an exploded schematic isometric perspective view, the auxiliary contacts module for circuit breakers and the parts that forms it, according to the state of the art.

### DETAILED DESCRIPTION OF THE DRAWINGS

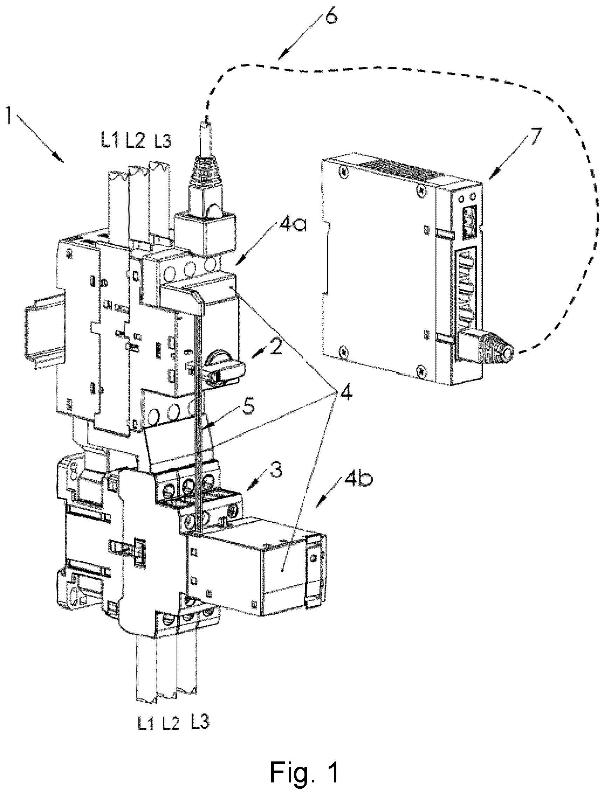

Figure 1 illustrates, in an isometric perspective view, a starter assembly (1), comprising a multipolar circuit breaker (2) upstream interrupt and an electromagnetic contactor (3) downstream, when viewed frontally from an operating position, fixed by any fastening means, for example, a rear support such as a DIN rail, said starter assembly (1) coupled to the auxiliary modules assembly (4) for feeding and monitoring, comprising an upper auxiliary module (4a), a lower module (4b) and a cable (5), said auxiliary modules assembly (4) is associated with said multipolar circuit breaker (2) and said electromagnetic contactor (3), where the said auxiliary modules assembly (4) connects by means of a cable (6) to a programmable controller (7), said electromagnetic contactor (3) and said multipolar circuit breaker (2), according to a first preferred embodiment of the invention.

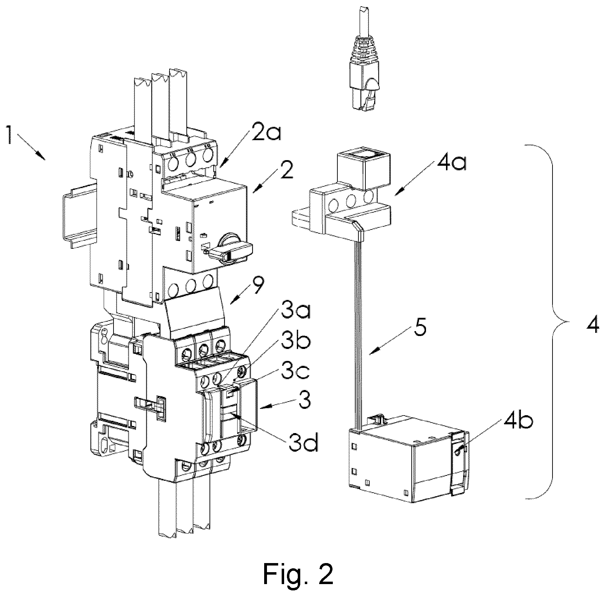

Figure 2 illustrates, in a partially exploded isometric schematic perspective view, the components of the starter assembly (1) of Figure 1, according to a first preferred embodiment of the invention, comprising a subassembly of a multipolar circuit breaker (2) comprising a recess (2a) for mechanical coupling of the upper auxiliary module (4a) and an electromagnetic contactor (3) comprising the recesses (3a, 3b, 3c) and a movable contact carrier (3d) for mechanical coupling of the lower auxiliary module (4b), standards in the state of the art, connected to each other by a base (9), where said auxiliary modules assembly (4) is presented separately, comprising an upper auxiliary module (4a) associated with said multipolar circuit breaker (2) and where the said upper auxiliary module (4a) is interconnected by a cable (5) to a lower auxiliary module (4b) that is associated with said electromagnetic contactor (3).

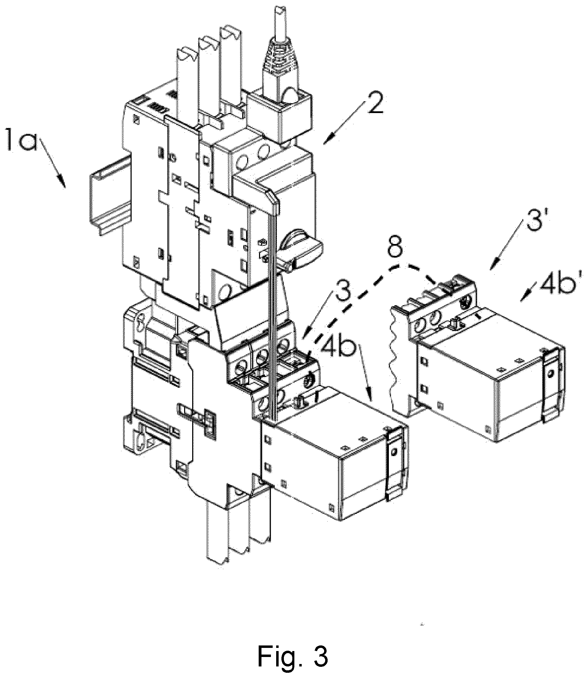

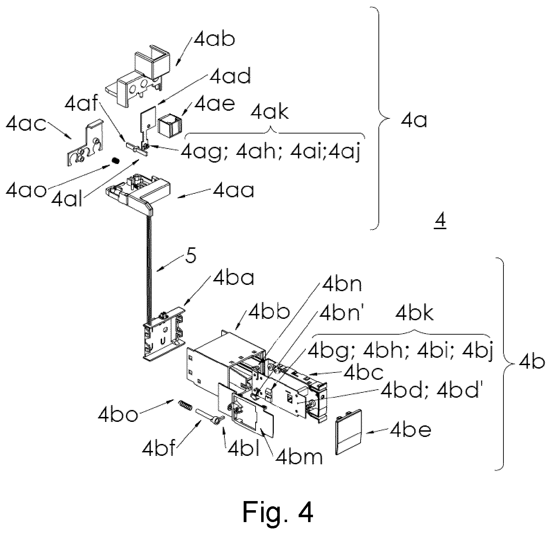

Figure 3 illustrates, in an isometric perspective, a reversing starter assembly (1a) as an alternative embodiment of the auxiliary modules, comprising said multipolar circuit breaker (2) and said electromagnetic contactor (3) mounted with said auxiliary modules assembly (4), where the said lower auxiliary module (4b) is alternatively connected, in this arrangement, by means of a cable (8) to a second lower auxiliary module (4b'), comprising a connection between a second printed circuit board (4bd) (represented in Figure 4) to a third printed circuit board (4bd') (not represented) which is internally located to said second auxiliary module (4b') installed on another electromagnetic contactor (3').

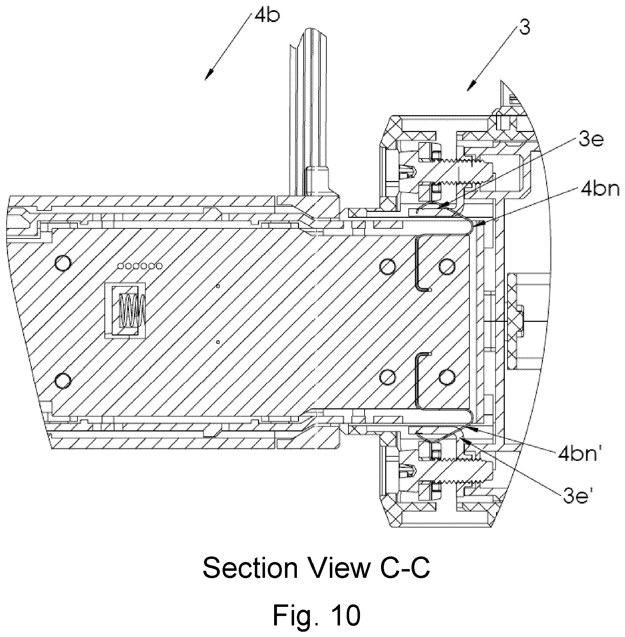

Figure 4 illustrates, in a schematic isometric perspective exploded view, said auxiliary modules assembly (4), *per se,* according to a first preferred embodiment of the invention, comprising said upper auxiliary module (4a) comprising a base (4aa), a frame (4ab) and a cover (4ac) that form together an insulating casing of said upper auxiliary module (4a), comprising a first printed circuit board (4ad) associated with an external connector (4ae) and a first position sensor (4ak), preferably an optical sensor (4ag), mounted inside said casing, by any conventional means of assembly, where said optical sensor (4ag) is sensitized by a movable rod (4af), where the said movable rod (4af) alternatively has an element of ferromagnetic material (4al) coupled, such as a magnet or other material with such characteristic, said movable rod (4af) being associated and solidary to the translation movement of the movable contacts (not represented) of said multipolar circuit breaker (2), according to its operation status which may be on or off, by means of an elastic element (4ao). Said first printed circuit board (4ad) of the upper auxiliary module (4a) on the one hand is electrically coupled by means of a cable (6) to a programmable controller (7) and on the other hand is electrically coupled to a cable (5) (shown in Figure 1) that interconnects the first printed circuit board (4ad) to a second printed circuit board (4bd), belonging to said lower auxiliary module (4b). Said lower auxiliary module (4b) comprises a base (4ba), a frame (4bb), a top cover (4be), which together form an insulating casing of said lower auxiliary module (4b), a support (4bc) and a side cover (4bm) for said second printed circuit board (4bd) mounted inside said casing, by any conventional means of assembly, said second printed circuit board (4bd) which has elastic elements (4bn, 4bn') of electrical coupling to connect to the coil terminals (3e, 3e') of electrical control (presented in Figure 10), a position sensor (4bk), preferably an optical sensor (4bg), which can alternatively be a capacitive position sensor (4bh), an inductive position sensor (4bi) or a "hall" position sensor (4bj), where said position sensor (4bk) is sensitized by a movable rod (4bf), where the said movable rod (4bf) can alternatively have an element of ferromagnetic material (4bl) coupled, such as a magnet or other material with such characteristic, wherein said movable rod (4bf) is solidary to the translation movement of the movable contact carrier (3d) of said electromagnetic contactor (3), according to its operating status which can be on or off, shown in Figure 2, by means of an elastic element (4bo).

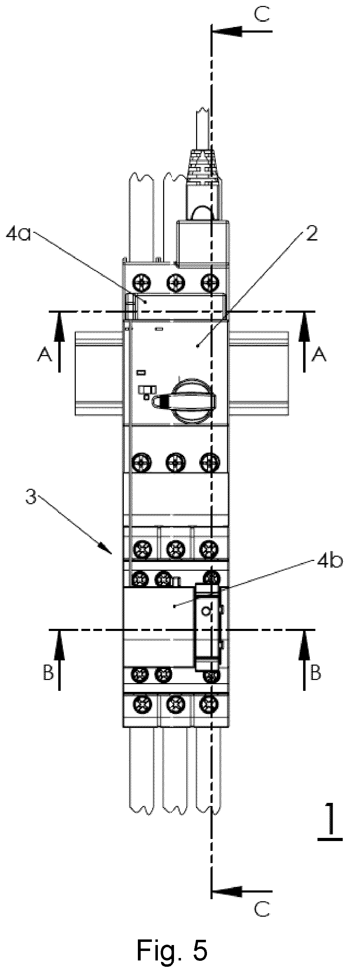

Figure 5 is a front top view of said starter assembly (1), comprising said multipolar circuit breaker (2), said electromagnetic contactor (3), said upper auxiliary module (4a), said lower auxiliary module (4b), in addition to the indication of three section views A-A, B-B and C-C.

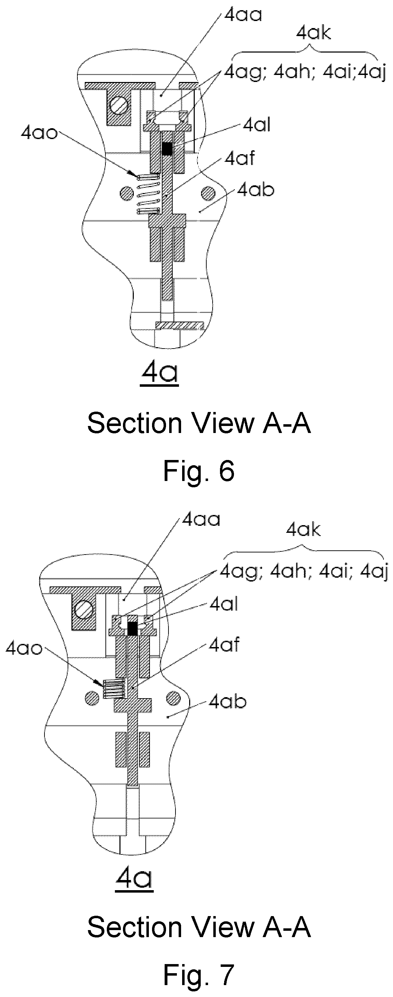

Figure 6 illustrates an internal section view A-A of said upper auxiliary module (4a) of said auxiliary modules assembly (4) (seen in Figures 1 to 5), where said multipolar circuit breaker (2) is in "off" status, comprising a base (4aa), a frame (4ab), an elastic element (4ao) extended in relaxed state, a movable rod (4af) which may alternatively have an element of ferromagnetic material (4al) attached thereto, such as a magnet or other material with such characteristic, and a position sensor (4ak), preferably an an optical sensor (4ag), which may alternatively be a capacitive sensor (4ah), an inductive sensor (4ai) or a "hall" position sensor (4aj), among other components (not represented), according to a first preferred embodiment of the invention.

Figure 7 illustrates an cross section view A-A of said upper auxiliary module (4a) of said auxiliary modules assembly (4), seen in Figures 1 to 5, in which the multipolar circuit breaker (2) is in "on" state, said base (4aa) comprising said frame (4ab), an elastic element (4ao) in compressed state, said movable rod (4af) may alternatively have an element of ferromagnetic material (4al) attached to it, and said position sensor (4ak) can alternatively be an optical sensor (4ag), a capacitive sensor (4ah), an inductive sensor (4ai) or a "hall" position sensor (4aj), (seen too in Figure 6), among other components (not represented), according to a first preferred embodiment of the invention.

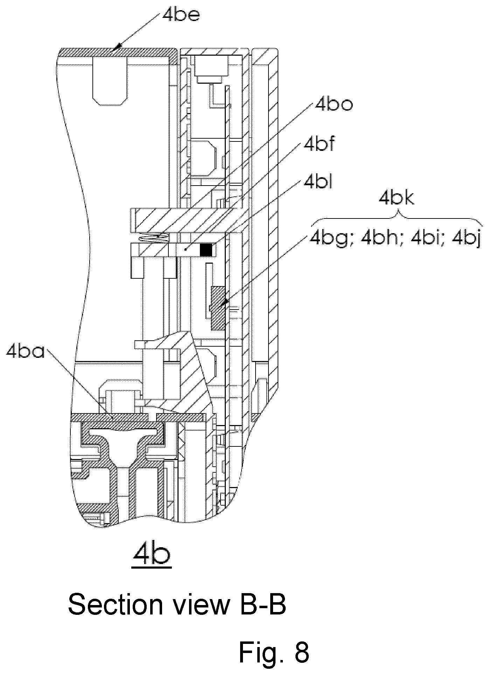

Figure 8 illustrates an section view B-B of said lower auxiliary module (4b) of said auxiliary modules assembly (4) (seen in Figures 1 to 5), in which said electromagnetic contactor (3) is in "off" status, comprising a base (4ba), a top cover (4be), an elastic element (4bo) in compressed state, a movable rod (4bf) and may alternatively have an ferromagnetic material element (4bl) attached thereto, and a position sensor (4bk), which may alternatively be an optical sensor (4bg), a capacitive sensor (4bh), an inductive sensor (4bi) or a "hall" sensor (4bj), among other components (not represented), according to a first preferred embodiment of the invention.

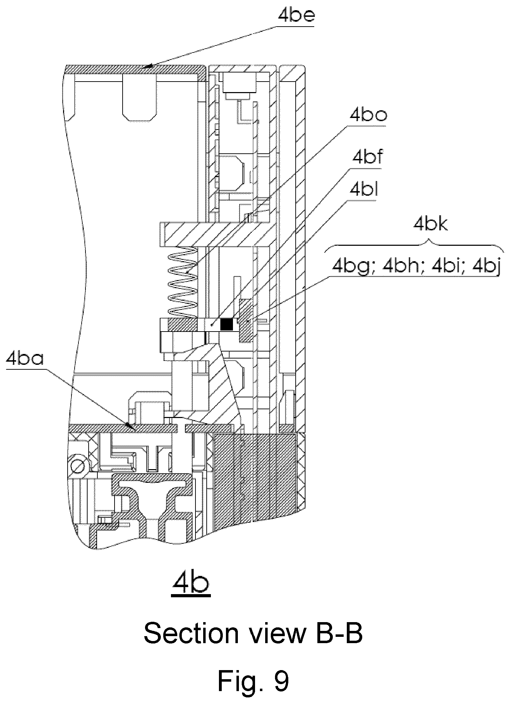

Figure 9 illustrates a cross section view B-B of said lower auxiliary module (4b) of said auxiliary modules assembly (4) (seen in Figures 1 to 5), in which said electromagnetic contactor (3) is in "on" status, comprising said base (4ba), said upper cover (4be), said elastic element (4bo) extended in relaxed state, said movable rod (4bf) may alternatively have an element of ferromagnetic material (4bl) attached thereto, and said position sensor (4bk), which may be alternatively an optical sensor (4bg), a capacitive sensor (4bh), an inductive sensor (4bi) or a "hall" position sensor (4bj) (as seen in Figure 8), among other components (not represented), according to a first preferred embodiment of the invention.

Figure 10 illustrates, in a section view C-C, an internal part of said lower auxiliary module (4b) of said auxiliary modules assembly (4) coupled to the said contactor (3) comprising two elastic elements (4bn, 4bn') flexed and tensioned against the coil terminals (3e, 3e') of said contactor (3), according to a first preferred embodiment of the invention.

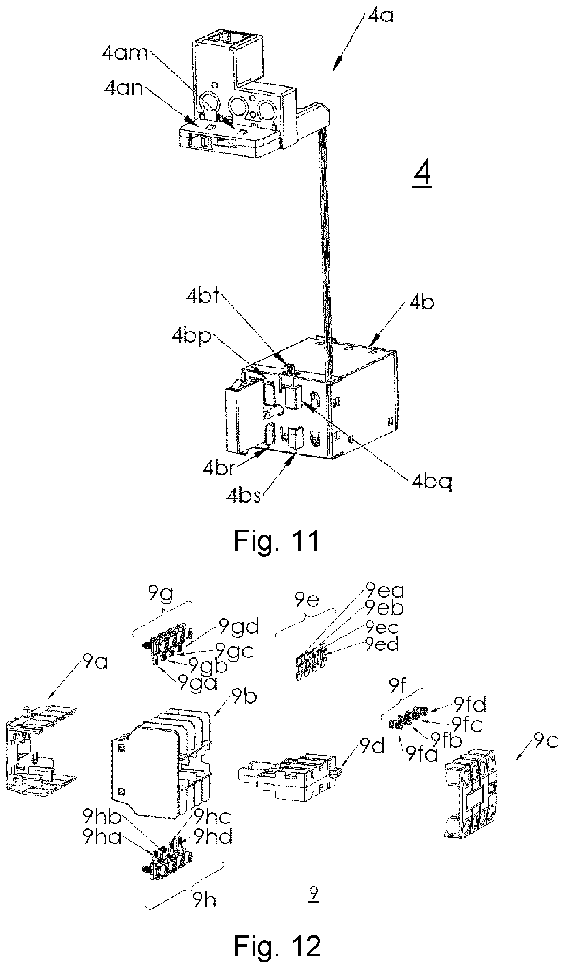

Figure 11 is a rear top perspective view of said auxiliary modules assembly (4), comprising the said upper auxiliary module (4a) and the said lower auxiliary module (4b) comprising the fastening and locking elements (4am, 4an, 4bp, 4bq, 4br, 4bs, 4bt), according to a first preferred embodiment of the invention.

Figure 12 illustrates, in an exploded top isometric schematic perspective view, the components of a module of auxiliary contacts (9) for said contactors (3), comprising a base (9a), an intermediate support (9b), a top cover (9c), an auxiliary movable contact carrier (9d), auxiliary movable contacts (9ea, 9eb, 9ec, 9ed) forming a set of auxiliary movable contacts (9e), elastic elements (9fa, 9fb, 9fc, 9fd) forming a set of elastic elements (9f), upper fixed auxiliary terminals (9ga, 9gb, 9gc, 9gd) forming a set of upper auxiliary fixed terminals (9g) and lower auxiliary terminals (9ha, 9hb, 9hc, 9hd) forming a set of lower auxiliary terminals (9h).

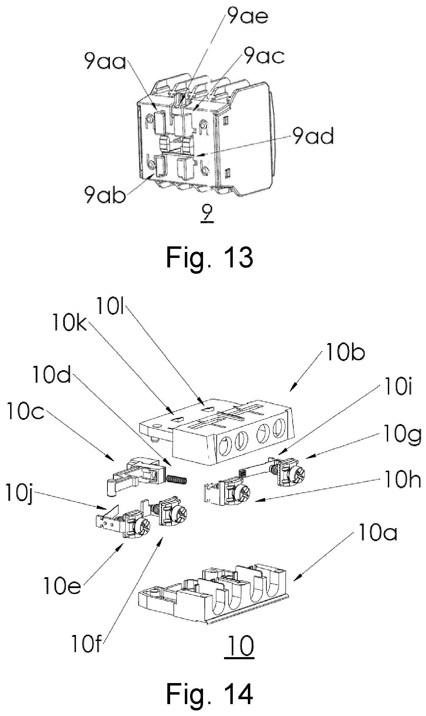

Figure 13 is a bottom rear isometric perspective view of said module of auxiliary contacts (9) for said contactors (3), comprising fastening and locking elements (9aa, 9ab, 9ac, 9ad, 9ae).

Figure 14 illustrates, in an exploded schematic isometric top perspective view, the components of a module of auxiliary contacts (10) for said circuit breakers (2), comprising a base (10a), an upper support (10b), an auxiliary movable contact carrier (10c), auxiliary movable contacts (10i, 10j), an elastic element (10d), fixed auxiliary terminals (10e, 10f, 10g, 10h) and fastening and locking elements (10k, 101).

### OPERATION OF THE INVENTION

The present invention discloses a said auxiliary modules assembly (4), according to the invention, which is coupled frontally to a said multipolar circuit breaker (2), such as preferably a motor circuit breaker or alternatively a molded case circuit breaker in a molded box, and simultaneously to a said electromagnetic contactor (3), to form a said starter assembly (1) for electric motors, said auxiliary modules assembly (4) having the main purpose of remotely commanding and monitoring the operating status (on/off) of said starter assembly (1) for electric motors.

Said auxiliary modules assembly (4) comprises fundamentally two said modules (4a, 4b), electrically interconnected with each other through a said cable (5), and one of the said modules, called the upper auxiliary module (4a) is associated with a said multipolar circuit breaker (2) through the mechanical coupling between the said recess (2a) of said circuit breaker (2), as shown in Figure 2, and the said fastening elements (4am, 4an) present in said upper module (4a) (according to Figure 11), and said mechanical coupling described between the said multipolar circuit breaker (2) and said upper auxiliary module (4a) is identical to the coupling with a said module of auxiliary contacts (10) for said circuit breakers (2) (according to Figure 14), thus enabling the interchangeability between them. Said lower auxiliary module (4b) is associated with the said electromagnetic contactor (3), through the mechanical coupling between the said fastening and locking recesses (3a, 3b, 3c) of said contactor (3) (as shown in Figure 2), and the said fastening and locking elements (4bp, 4bq, 4br, 4bs, 4bt) present in said lower module (4b) (as shown in Figure 11), and the said mechanical coupling described between the said contactor (3) and said lower auxiliary module (4b) is identical to the coupling with the said module of auxiliary contacts (9) for said contactors (3), thus enabling interchangeability between them. Both the said upper and lower modules (4a, 4b) have inside their casings, as seen in Figure 4, an said optical sensor (4ag, 4bg) and a said movable rod (4af, 4bf), among other components, said movable rod (4af, 4bf) solidary to the movable parts of their respective switching device (2, 3), in this case, a said multipolar circuit breaker (2) and an said electromagnetic contactor (3), respectively, and said movable rod (4af, 4bf) is in a "first position" (according to Figures 6 and 8 respectively), when their said switching device (2, 3) is "off", and in a "second position" (according to Figures 7 and 9 respectively), when the said switching device (2, 3) is "on". Said movable rod (4af, 4bf) acts as a barrier, sometimes present, sometimes not, between the transmitter and the receiver of the optical sensor (4ag, 4bg), in which through an electrical signal emitted from an emitter and received by a receiver, will indicate through the initial or final positioning of said movable rod (4af, 4bf) the operating status of the said switching device (2, 3) to said programmable controller (7). Said optical sensors (4ag, 4bg) of the respective upper and lower modules (4a, 4b), can be alternatively capacitive sensors (4ah, 4bh), inductive sensor (4ai, 4bi) or "hall" position sensor (4aj, 4bj), respectively, and the said movable rods (4af, 4bf) of the said upper and lower modules (4a, 4b) may alternatively contain an element of ferromagnetic material (4al, 4bl) attached to the respective said movable rods (4af, 4bf). The operation described above refers to the preferred embodiment of the invention, using an optical sensor (4ag, 4bg) combined with the movable rod (4af, 4bf).

Said lower auxiliary module (4b) is interconnected with said upper auxiliary module (4a) of said auxiliary modules assembly (4), through said cable (5), said auxiliary modules assembly (4) comprising said external connector (4ae), which in turn connects through a power and monitoring cable (6) such as a multiwire, multipolar or other cable to communicate, monitor and provide power in relation to the said programmable controller (7), in order to send electrical signals corresponding to the operating status of the said starter assembly (1) and simultaneously receive electrical signals from said programmable controller (7), which will be sent to the said electromagnetic contactor command (3) so that there is a change in the status thereof.

When said starter assembly (1) is in "off" state, i.e. both said multipolar circuit breaker (2) and electromagnetic contactor (3) are switched off, and said movable rod (4af, 4bf) of the respective said upper (4a) and lower (4b) modules are in the "first position", where the said respective optical sensors (4ag, 4bg) of said upper (4a) and lower (4b) modules send electrical signals informing the corresponding operating status "off" of the said starter assembly (1) to said programmable controller (7). The instant the said multipolar circuit breaker (2) is switched "on", the said movable rod (4af) of the upper auxiliary module (4a) assumes a "second position", closer to said optical sensor (4ag), sensitizing said optical sensor (4ag), which sends an electrical signal to said programmable controller (7), stating that the said starter assembly (1) is ready to drive the said electric motor (not represented), depending only on a command from said programmable controller (7) to activate the said electromagnetic contactor (3). At the moment when the said programmable controller (7) sends a command signal to the said electromagnetic contactor (3), it is "on" , establishing an electric current path for said motor (not represented) through its main contacts (not represented). With this, the movable rod (4bf) of the said lower auxiliary module (4b) assumes a "second position" closer to said optical sensor (4bg), sensitizing said optical sensor (4bg) that sends an electrical signal to said programmable controller (7), informing said programmable controller (7) that the said electromagnetic contactor (3) actually executed the requested command.

Conversely, when said programmable controller (7) interrupts the trigger control signal of said electromagnetic contactor (3), it turns "off", said electromagnetic contactor (3) again assumes the "off" status and said movable rod (4bf) of said lower auxiliary module (4b) returns to said "first position" farther from said optical sensor (4bg), changing the logical status of said optical sensor (4bg), which sends a signal, indicating that the shutdown of the said electromagnetic contactor (3) has actually occurred.

In the event of any failure during the shutdown of said electromagnetic contactor (3), for example a welding of said contacts (not represented), where said movable rod (4bf) of said lower auxiliary module (4b) has not returned to said "first position" ("off"), not changing the logical status of said optical sensor (4bg), thus the said programmable controller (7) through a logic appropriate to the control of this type of device, such as Boolean, "fuzzy" including artificial intelligence algorithms, among others, interpreting this return signal acting between the signals of said optical sensor (4bg) and the said electromagnetic contactor command (3) will indicate that an operation inconsistency and may block said starter assembly (1), preventing new drives from occurring until a technician checks the alleged operation failure.

Another common type of failure can occur in the ligament of said electromagnetic contactor (3), for example the occurrence of a coil burn (not represented), where said movable rod (4bf) of said lower module (4b) connected to said electromagnetic contactor (3) when energized does not move to said "second position" (on), not changing the logical status of said optical sensor (4bg) of said lower module (4b) thus, said programmable controller (7) through a logic appropriate to the control of this type of switching device (2, 3), such as Boolean, "fuzzy" including artificial intelligence algorithms, among others, interpreting this return signal acting between the signals of said optical sensor (4bg) and the command of the said electromagnetic contactor (3), said programmable controller (7) will indicate that an operation inconsistency has occurred and may block the said starter assembly (1), preventing new drives from occurring until a technician checks the alleged operation failure.

In another operating situation in which said starter assembly (1) is "on" and said multipolar circuit breaker (2) is "turned off" manually or otherwise, "off" automatically due to an overload or short circuit event, for example, which occurs in the electrical circuit (not represented) in which said starter assembly (1) is part, said movable rod (4af) of said upper auxiliary module (4a) will return to the "first position" (off), changing the logical status of said optical sensor (4ag) that will send a signal to said programmable controller (7), indicating that the said multipolar circuit breaker (2) has been switched "off".

A second preferred embodiment of the present invention is established by means of a said reversing starter assembly (1a) which comprises said multipolar circuit breaker (2) and said electromagnetic contactor (3), mounted with said auxiliary modules assembly (4) together with a second said lower auxiliary module (4b'), comprising a third said printed circuit board (4bd'), identical to said printed circuit board (4bd) installed on another said electromagnetic contactor (3') and connected to said lower auxiliary module (4b) by means of a said cable (8) between the said printed circuit boards (4bd, 4bd'). Said second lower auxiliary module (4b') operates identically to said lower auxiliary module (4b). In order for this second incorporation to perform its function properly, said programmable controller (7) through a logic appropriate to the control of this type of switching device (2, 3, 3'), such as Boolean, "fuzzy" including artificial intelligence algorithms, among others, performs an electrical interlock between said lower auxiliary module (4b) and said second lower auxiliary module (4b'), not allowing the said reversing starter assembly (1a) the concomitant performance of the said contactors (3, 3'). In cases where there is occurrence of welding contacts (not represented), of coil burning (not represented) or other failures in said contactors (3, 3') are diagnosed, said programmable controller (7) will indicate that an operation inconsistency has occurred and may block the reversible starter assembly (1a), preventing new drives from occurring until a technician checks the alleged malfunction.

In a third preferred embodiment of the present invention is established by means of a said auxiliary modules assembly (4), coupled to said starter assembly (1) for electric motors (not represented), alternatively using an said inductive sensor (4ai, 4bi), combined with a movable rod (4af, 4bf) and an element of ferromagnetic material (4al, 4bl) coupled to said rod, where said ferromagnetic material element (4al, 4bl) coupled, preferably a magnet, is used to sensitize said inductive sensor (4ai, 4bi). Thus, the operation embodied herein for the main purpose of remotely commanding and monitoring the operating status (on/off) of said starter assembly (1) for electric motors can be extended to any other types of sensors, rods and ferromagnetic materials analogous to those described herein, in view of the similarity of its operation.

A first objective of the present invention is achieved by providing an auxiliary modules assembly (4) for a starter assembly (1), comprised by a multipolar circuit breaker (2) and an electromagnetic contactor (3) upstream, among other components, and said auxiliary modules assembly (4) is able to send communication signals to indicate the status of said multipolar circuit breaker (2) and said electromagnetic contactor (3) and receive, by the same communication cable (6), command signals for said electromagnetic contactor (3) from a programmable controller (7).

A second objective of the present invention is achieved by providing said auxiliary modules assembly (4) for a starter assembly (1) a reliable indication of electrical signals related to the status on or off of the status of the switching device, whether for the purpose of interpreting a multipolar circuit breaker (2) or an electromagnetic contactor (3), by using an optical sensor (4ag, 4bg) installed on the switching device (2, 3), and these signals can be emitted individually either from a multipolar circuit breaker (2) or an electromagnetic contactor (3) .

A third objective of the invention is achieved by using the same auxiliary modules assembly (4) for different sizes of multipolar circuit breakers (2) and electromagnetic contactors (3) that forms the starter assembly (1), even for switching devices (2, 3) with different sizes, because said movable rods (4af, 4bf) can sensitize their relative optical sensors (4ag, 4bg) for a wide dimensional range of the movable parts of their respective switching devices.

A fourth objective of the invention is achieved by allowing the coupling of the auxiliary modules assembly (4) in the starter assembly (1) to be performed only mechanically through quick couplings (4am, 4an) and (4bp, 4bq, 4br, 4bs, 4bt) contained in the frame (4ab) and base (4ba) of the respective upper (4a) and lower auxiliary modules (4b), requiring no use of tools such as a screwdriver, for example, and additional electrical connections.

A fifth objective of the invention is achieved when using for mounting the starter assembly (1) auxiliary modules (4a, 4b) for switching devices (2, 3), such as the circuit breaker (2) and the contactor (3) having interchangeability with a module of auxiliary contacts (9, 10), respectively, for the assembly of said auxiliary modules assembly (4), where the construction of said upper auxiliary module (4a) provides coupling elements (4am, 4an) and the construction of said lower auxiliary module (4b) provides for fastening and locking elements (4bp, 4bq, 4br, 4bs, 4bt) according to Figure 11, which are coupled to the respective recesses (2a, 3a, 3b, 3c) of the circuit breaker (2) and the contactor (3) as shown in Figure 2. Such coupling elements (4am, 4an) are identical to the coupling elements (10k, 101) of a module of auxiliary contacts (10) for circuit breakers (2), and said fastening and locking elements (4bp, 4bq, 4br, 4bs, 4bt) are identical to the fastening and locking elements (9aa, 9ab, 9ac, 9ad, 9ae) of a module of auxiliary contacts (9) for contactors (3), thus enabling interchangeability between modules. The module of auxiliary contacts (10) is comprised of a base (10a) and a upper support (10b) forming an insulating casing between them, which houses inside an auxiliary movable contact carrier (10c), and said auxiliary movable contact carrier (10c) on the one hand mechanically attaches the movable parts (not represented) of said circuit breaker (2), being solidary to the displacement movement of the movable contacts (not represented), depending on the operating status of the circuit breaker (2), which can be "on" or "off", and on the other hand is solidary to the auxiliary movable contacts (10i, 10j), preferably through an elastic element (10d). Said module of auxiliary contacts (10) for circuit breakers additionally has fixed auxiliary terminals (10e, 10f, 10g, 10h) mechanically attached to said base (10a), and when said circuit breaker (2) is connected, said auxiliary movable contact carrier (10c) moves solidarily to the movable parts of said circuit breaker (2), transferring the displacement movement through said elastic element (10d) to the auxiliary movable contacts (10i, 10j) until they find said fixed auxiliary terminals (10e, 10f, 10g, 10h) thus forming a path for the electric current to be conducted. The module of auxiliary contacts (9) for contactors (3) is comprised of a clamping base (9a), an intermediate support (9b) and a top cover (9c), forming an insulating housing that houses inside the said auxiliary movable contact carrier (9d), and said auxiliary movable contact carrier (9d) on the one hand mechanically attaches to the movable contact carrier (3d) of said contactor (3), being solidary to the displacement movement thereof, according to the operating status of the said contactor (3), which can be "on" or "off", and on the other hand has rails to guide said set of said auxiliary movable contacts (9e) and said set of said elastic elements (9f) which keeps said set of auxiliary movable contacts (9e) attached to their respective accommodations. Said module of auxiliary contacts (9) also has said set of said upper auxiliary fixed terminals (9g) and said set of lower auxiliary terminals (9h), and said set of upper auxiliary fixed terminals (9g) is mechanically attached to the top of said insulating casing (9b), when seen in a frontal position, and said set of lower auxiliary terminals (9h) is attached at the bottom of said insulating casing (9b). When said contactor (3) is turned "on", said auxiliary movable contact carrier (9d) moves jointly and severally to said movable contact carrier (3d) of said contactor (3), carrying together said auxiliary movable contact (9e) until it finds said sets of upper and lower fixed auxiliary terminals (9g, 9h), thus forming a path for the electric current to be conducted.

A sixth objective of the invention is achieved by providing the said auxiliary modules assembly (4) that has a higher reliability in the flow of electrical signals when compared with the state of the art due to the said external connector (4ae) being housed specifically in the said upper auxiliary module (4a) that is associated with the said circuit breaker (2), and this switching device has a more stable operating characteristic due to the reduced mechanical vibration that said circuit breaker (2) usually produces during its operation and therefore reduces the mechanical vibration transmitted to the said external coupling connector (4ae) when compared to an electromagnetic contactor, which has a high mechanical vibration intrinsic to the operation of its magnetic system.

Additionally, the invention allows the implementation of a reversing starter assembly( la), as a variation of the implementation of the auxiliary modules assembly (4), in which the lower auxiliary module (4b) is connected, alternatively in this arrangement, by means of asaid cable (8) to a said second lower auxiliary module (4b') installed on another said electromagnetic contactor (3'), where said cable (8) can extend the control and operation signals related to the switching devices (2, 3) also to other switching devices, such as an said electromagnetic contactor (3'), for example, by interconnecting a said second printed circuit board (4bd) and a said third printed circuit board (4bd').

Additionally the present invention can provide an said auxiliary modules assembly (4) for a said starter assembly (1, la), comprised by a said multipolar circuit breaker (2) and an said electromagnetic contactor (3, 3') upstream, among other components, and said auxiliary modules assembly (4) is able to send communication signals to indicate the status of said multipolar circuit breaker (2) and the electromagnetic contactor (3, 3') and also receive command signals for said electromagnetic contactor (3, 3') from a said programmable controller (7), through said printed circuit boards (4ad, 4bd, 4bd') of said auxiliary modules assembly (4) that may include wireless media.

## Claims

1. An "AUXILIARY MODULES ASSEMBLY FOR coupling with a STARTER ASSEMBLY (1) FOR ELECTRIC MOTORS", the auxiliary modules assembly (4) comprises an upper auxiliary module (4a) configured to be associated with a circuit breaker (2)of the starter assembly (1), when in a state coupled with the starter assembly (1), the upper auxiliary module (4a) is electrically coupled by a cable (5) to a lower auxiliary module (4b) configured to be associated with a contactor (3) of the starter assembly (1), when in the state coupled with the starter assembly (1), charactrerized in that the upper auxiliary module (4a) comprises a first printed circuit board (4ad) associated with an external connector (4ae)and a first position sensor (4ak) configured to detect an operating status of said circuit breaker (2), when in the state coupled with the starter assembly (1), and in that the lower auxiliary module (4b) comprises a second printed circuit board (4bd) associated with a second position sensor (4bk) configured to detect the operating status of said contactor (3), when in the state coupled with the starter assembly (1), wherein the second printed circuit board (4bd)is configured to electrically connect to a command coil of said contactor (3).

2. The AUXILIARY MODULES ASSEMBLY according to claim 1, **characterized by** the fact that said external connector (4ae) electrically connects through a cable (6) to a programmable controller (7).

3. The AUXILIARY MODULES ASSEMBLY according to claim 1, **characterized by** the fact that the position sensor (4ak, 4bk) is interchangeably an optical type sensor (4ag, 4bg) or capacitive type sensor (4ah, 4bh) or inductive type sensor (4ai, 4bi) or "hall" type sensor (4aj, 4bj).

4. The AUXILIARY MODULES ASSEMBLY according to claims 2 and 3, **characterized by** the fact that said position sensor (4ag, 4ah, 4bg, 4bh) by issuing an electrical signal capable of indicating an initial or final positioning of a movable rod (4af, 4bf) associated with the operating status of the switching device (2, 3) for said programmable controller (7).

5. The AUXILIARY MODULES ASSEMBLY to claims 2 and 3, **characterized by** the fact that said position sensor (4ai, 4aj, 4bi, 4bj), through an initial or final positioning of a movable rod (4af, 4bf) including an element of ferromagnetic material (4al, 4bl), is able to indicate through an electrical signal the status of said switching device (2, 3) to said programmable controller (7).

6. The AUXILIARY MODULES ASSEMBLY according to claim 1, **characterized by** the fact that said second printed circuit board (4bd) of said lower auxiliary module (4b) has elastic elements (4bn, 4bn') of electrical coupling, to connect to the terminals (3e, 3e') of the command coil of said electromagnetic contactor (3).

7. The AUXILIARY MODULES ASSEMBLY according to claim 1, **characterized by** the fact that said auxiliary modules assembly (4), comprising a said lower auxiliary module (4b), comprising a second printed circuit board (4bd), can connect by means of a cable (8) to another lower auxiliary module (4b'), comprising a third printed circuit board (4bd') installed on top of another electromagnetic contactor (3').

8. The AUXILIARY MODULES ASSEMBLY according to claim 1, **characterized by** the fact that said upper auxiliary module (4a) has fastening and locking elements (4am, 4an) in combination with a recess (2a) of said circuit breaker (2), to attach to it.

9. The AUXILIARY MODULES ASSEMBLY according to claim 8, **characterized by** the fact that the fastening and locking elements (10k, 101) of a module of auxiliary contacts (10) for circuit breakers (2) are identical to said fastening and locking elements (4am, 4an) of said upper auxiliary module (4a), enabling interchangeability between them.

10. The AUXILIARY MODULES ASSEMBLY according to claim 1, **characterized by** the fact that said lower auxiliary module (4b) has fastening and locking elements (4bp, 4bq, 4br, 4bs, 4bt) in combination with recesses (3a, 3b, 3c) of the said contactor (3), to attach to it.

11. The AUXILIARY MODULES ASSEMBLY in accordance with claim 10, **characterized by** the fact that the fastening and locking elements (9aa, 9ab, 9ac, 9ad, 9ae) of a module of auxiliary contacts (9) for said contactors (3) are identical to said fastening and locking elements (4bp, 4bq, 4br, 4bs, 4bt) of said lower auxiliary module (4b), enabling interchangeability between them.

12. The AUXILIARY MODULES ASSEMBLY according to claim 1, **characterized by** the fact that said auxiliary modules assembly (4) includes wireless communication means.

## Patentansprüche

1. "HILFSMODULANORDNUNG ZUM Koppeln mit einer STARTERANORDNUNG (1) FÜR ELEKTROMOTOREN", wobei die Hilfsmodulanordnung (4) ein oberes Hilfsmodul (4a) aufweist, das dazu konfiguriert ist, einem Schaltungsunterbrecher (2) der Starteranordnung (1) zugeordnet zu sein, wenn es in einem mit der Starteranordnung (1) gekoppelten Zustand ist, wobei das obere Hilfsmodul (4a) durch ein Kabel (5) elektrisch mit einem unteren Hilfsmodul (4b) gekoppelt ist, das dazu konfiguriert ist, einem Kontaktgeber (3) der Starteranordnung (1) zugeordnet zu sein, wenn es in dem mit der Starteranordnung (1) gekoppelten Zustand ist,
**dadurch gekennzeichnet, dass** das obere Hilfsmodul (4a) eine erste Leiterplatte (4ad), die einem externen Verbinder (4ae) zugeordnet ist, und einen ersten Positionssensor (4ak) aufweist, der dazu konfiguriert ist, einen Betriebszustand des Schaltungsunterbrechers (2) zu erfassen, wenn es in dem mit der Starteranordnung (1) gekoppelten Zustand ist, und dass das untere Hilfsmodul (4b) eine zweite Leiterplatte (4bd) aufweist, die einem zweiten Positionssensor (4bk) zugeordnet ist, der dazu konfiguriert ist, den Betriebszustand des Kontaktgebers (3) zu erfassen, wenn es in dem mit der Starteranordnung (1) gekoppelten Zustand ist, wobei die zweite Leiterplatte (4bd) dazu konfiguriert ist, elektrisch mit einer Befehlsspule des Kontaktgebers (3) verbunden zu sein.

2. HILFSMODULANORDNUNG gemäß Anspruch 1, **dadurch gekennzeichnet, dass** der externe Verbinder (4ae) durch ein Kabel (6) elektrisch mit einer programmierbaren Steuerung (7) verbunden ist.

3. HILFSMODULANORDNUNG gemäß Anspruch 1, **dadurch gekennzeichnet, dass** der Positionssensor (4ak, 4bk) austauschbar ein Sensor vom optischen Typ (4ag, 4bg) oder ein Sensor vom kapazitiven Typ (4ah, 4bh) oder ein Sensor vom induktiven Typ (4ai, 4bi) oder ein Sensor vom "Hall"-Typ (4aj, 4bj) ist.

4. HILFSMODULANORDNUNG gemäß den Ansprüchen 2 und 3, **dadurch gekennzeichnet, dass** der Positionssensor (4ag, 4ah, 4bg, 4bh) ein elektrisches Signal ausgibt, das in der Lage ist, eine anfängliche oder endgültige Positionierung einer beweglichen Stange (4af, 4bf) anzuzeigen, die dem Betriebszustand der Schaltvorrichtung (2, 3) zugeordnet ist, für die programmierbare Steuerung (7).

5. HILFSMODULANORDNUNG gemäß den Ansprüchen 2 und 3, **dadurch gekennzeichnet, dass** der Positionssensor (4ai, 4aj, 4bi, 4bj) durch eine anfängliche oder endgültige Positionierung einer beweglichen Stange (4af, 4bf), die ein Element aus ferromagnetischem Material (4al, 4bl) aufweist, in der Lage ist, durch ein elektrisches Signal den Zustand der Schaltvorrichtung (2, 3) an die programmierbare Steuerung (7) anzuzeigen.

6. HILFSMODULANORDNUNG gemäß Anspruch 1, **dadurch gekennzeichnet, dass** die zweite Leiterplatte (4bd) des unteren Hilfsmoduls (4b) elastische Elemente (4bn, 4bn') zum elektrischen Koppeln aufweist, um eine Verbindung zu den Anschlüssen (3e, 3e') der Befehlsspule des elektromagnetischen Kontaktgebers (3) herzustellen.

7. HILFSMODULANORDNUNG gemäß Anspruch 1, **dadurch gekennzeichnet, dass** die Hilfsmodulanordnung (4), die das untere Hilfsmodul (4b) aufweist, das eine zweite Leiterplatte (4bd) aufweist, mittels eines Kabels (8) mit einem anderen unteren Hilfsmodul (4b') verbunden sein kann, das eine dritte Leiterplatte (4bd') aufweist, die auf einem anderen elektromagnetischen Kontaktgeber (3') installiert ist.

8. HILFSMODULANORDNUNG gemäß Anspruch 1, **dadurch gekennzeichnet, dass** das obere Hilfsmodul (4a) Befestigungs- und Verriegelungselemente (4am, 4an) in Kombination mit einer Aussparung (2a) des Schaltungsunterbrechers (2) zur Befestigung daran aufweist.

9. HILFSMODULANORDNUNG gemäß Anspruch 8, **dadurch gekennzeichnet, dass** die Befestigungs- und Verriegelungselemente (10k, 101) eines Hilfskontaktemoduls (10) für Schaltungsunterbrecher (2) mit den Befestigungs- und Verriegelungselementen (4am, 4an) des oberen Hilfsmoduls (4a) identisch sind, wodurch eine Austauschbarkeit zwischen ihnen ermöglicht wird.

10. HILFSMODULANORDNUNG gemäß Anspruch 1, **dadurch gekennzeichnet, dass** das untere Hilfsmodul (4b) Befestigungs- und Verriegelungselemente (4bp, 4bq, 4br, 4bs, 4bt) in Kombination mit Aussparungen (3a, 3b, 3c) des Kontaktgebers (3) zur Befestigung daran aufweist.

11. HILFSMODULANORDNUNG gemäß Anspruch 10, **dadurch gekennzeichnet, dass** die Befestigungs- und Verriegelungselemente (9aa, 9ab, 9ac, 9ad, 9ae) eines Hilfskontaktemoduls (9) für die Kontaktgeber (3) mit den Befestigungs- und Verriegelungselementen (4bp, 4bq, 4br, 4bs, 4bt) des unteren Hilfsmoduls (4b) identisch sind, wodurch eine Austauschbarkeit zwischen ihnen ermöglicht wird.

12. HILFSMODULANORDNUNG gemäß Anspruch 1, **dadurch gekennzeichnet, dass** die Hilfsmodulanordnung (4) Drahtloskommunikationsmittel aufweist.

## Revendications

1. « ENSEMBLE DE MODULES AUXILIAIRES POUR le couplage avec un ENSEMBLE CLÉ DE DÉMARRAGE (1) POUR MOTEURS ÉLECTRIQUES », l'ensemble de modules auxiliaires (4) comprend un module auxiliaire supérieur (4a) configuré pour être associé à un disjoncteur (2) de l'ensemble clé de démarrage (1), lorsqu'il est dans un état couplé à l'ensemble clé de démarrage (1), le module auxiliaire supérieur (4a) est couplé électriquement par un câble (5) à un module auxiliaire inférieur (4b) configuré pour être associé à un contacteur (3) de l'ensemble clé de démarrage (1), lorsqu'il est dans l'état couplé à l'ensemble clé de démarrage (1),
**caractérisé en ce que** le module auxiliaire supérieur (4a) comprend une première carte de circuit imprimé (4ad) associée à un connecteur externe (4ae) et un premier capteur de position (4ak) configuré pour détecter un état de fonctionnement dudit disjoncteur (2), lorsqu'il est dans l'état couplé à l'ensemble clé de démarrage (1), et **en ce que** le module auxiliaire inférieur (4b) comprend une deuxième carte de circuit imprimé (4bd) associée à un deuxième capteur de position (4bk) configuré pour détecter l'état de fonctionnement dudit contacteur (3), lorsqu'il est dans l'état couplé à l'ensemble clé de démarrage (1), dans lequel la deuxième carte de circuit imprimé (4bd) est configurée pour se connecter électriquement à une bobine de commande dudit contacteur (3).

2. ENSEMBLE DE MODULES AUXILIAIRES selon la revendication 1, **caractérisé par le fait que** ledit connecteur externe (4ae) se connecte électriquement via un câble (6) à un contrôleur programmable (7).

3. ENSEMBLE DE MODULES AUXILIAIRES selon la revendication 1, **caractérisé par le fait que** le capteur de position (4ak, 4bk) est interchangeablement un capteur de type optique (4ag, 4bg) ou un capteur de type capacitif (4ah, 4bh) ou un capteur de type inductif (4ai, 4bi) ou un capteur de type « Hall » (4aj, 4bj).

4. ENSEMBLE DE MODULES AUXILIAIRES selon les revendications 2 et 3, **caractérisé par le fait que** ledit capteur de position (4ag, 4ah, 4bg, 4bh) émet un signal électrique capable d'indiquer un positionnement initial ou final d'une tige mobile (4af, 4bf) associée à l'état de fonctionnement du dispositif de commutation (2, 3) pour ledit contrôleur programmable (7).

5. ENSEMBLE DE MODULES AUXILIAIRES selon les revendications 2 et 3, **caractérisé par le fait que** ledit capteur de position (4ai, 4aj, 4bi, 4bj), grâce à un positionnement initial ou final d'une tige mobile (4af, 4bf) comprenant un élément en matériau ferromagnétique (4al, 4bl), est capable d'indiquer par un signal électrique l'état dudit dispositif de commutation (2, 3) audit contrôleur programmable (7).

6. ENSEMBLE DE MODULES AUXILIAIRES selon la revendication 1, **caractérisé par le fait que** ladite deuxième carte de circuit imprimé (4bd) dudit module auxiliaire inférieur (4b) comporte des éléments élastiques (4bn, 4bn') de couplage électrique, destinés à se connecter aux bornes (3e, 3e') de la bobine de commande dudit contacteur électromagnétique (3).

7. ENSEMBLE DE MODULES AUXILIAIRES selon la revendication 1, **caractérisé par le fait que** ledit ensemble de modules auxiliaires (4), comprenant un module auxiliaire inférieur (4b), comprenant une deuxième carte de circuit imprimé (4bd), peut se connecter au moyen d'un câble (8) à un autre module auxiliaire inférieur (4b'), comprenant une troisième carte de circuit imprimé (4bd') installée au-dessus d'un autre contacteur électromagnétique (3').

8. ENSEMBLE DE MODULES AUXILIAIRES selon la revendication 1, **caractérisé par le fait que** ledit module auxiliaire supérieur (4a) comporte des éléments de fixation et de verrouillage (4am, 4an) en combinaison avec un évidement (2a) dudit disjoncteur (2), pour s'y fixer.

9. ENSEMBLE DE MODULES AUXILIAIRES selon la revendication 8, **caractérisé par le fait que** les éléments de fixation et de verrouillage (10k, 101) d'un module de contacts auxiliaires (10) pour disjoncteurs (2) sont identiques auxdits éléments de fixation et de verrouillage (4am, 4an) dudit module auxiliaire supérieur (4a), permettant ainsi leur interchangeabilité.

10. ENSEMBLE DE MODULES AUXILIAIRES selon la revendication 1, **caractérisé par le fait que** ledit module auxiliaire inférieur (4b) comporte des éléments de fixation et de verrouillage (4bp, 4bq, 4br, 4bs, 4bt) en combinaison avec des évidements (3a, 3b, 3c) dudit contacteur (3), pour s'y fixer.

11. ENSEMBLE DE MODULES AUXILIAIRES selon la revendication 10, **caractérisé par le fait que** les éléments de fixation et de verrouillage (9aa, 9ab, 9ac, 9ad, 9ae) d'un module de contacts auxiliaires (9) pour lesdits contacteurs (3) sont identiques auxdits éléments de fixation et de verrouillage (4bp, 4bq, 4br, 4bs, 4bt) dudit module auxiliaire inférieur (4b), permettant leur interchangeabilité.

12. ENSEMBLE DE MODULES AUXILIAIRES selon la revendication 1, **caractérisé par le fait que** ledit ensemble de modules auxiliaires (4) comprend des moyens de communication sans fil.
